# EUROPÄISCHE PATENTSCHRIFT

(11) **EP 3 944 760 B1**
(45) Veröffentlichungstag und Bekanntmachung des Hinweises auf die Patenterteilung: **30.07.2025**
(21) Anmeldenummer: 21180646.8
(22) Anmeldetag: 21.06.2021
(51) Int. Cl.: A01K 1/03

(54) **KLEINTIERBEHAUSUNG**
HOUSING FOR SMALL ANIMALS
ABRI POUR PETITS ANIMAUX

(30) Priorität: 31.07.2020 DE 102020120252
(43) Veröffentlichungstag der Anmeldung: 02.02.2022
(73) Patentinhaber: Albert Kerbl GmbH, 84428 Buchbach (DE)
(72) Erfinder: Strobel, Yul, 88214 Ravensburg (DE)
(74) Vertreter: Kalkoff & Partner Patentanwälte mbB

(56) Entgegenhaltungen:
- EP-A1- 3 503 721
- US-A- 1 870 957
- US-A- 2 795 208
- US-B1- 6 675 740

## Beschreibung

Die Erfindung betrifft eine Kleintierbehausung zur Outdoorhaltung von Kleintieren, insbesondere Kaninchen, mit
- einem ersten Behausungsteil mit einer Grundplatte und einem eine Oberseite der Grundplatte zumindest teilweise überdeckenden, mit der Grundplatte verbundenen Haubenkörper zur Bildung eines ersten Innenraums.

Kleintierbehausungen der eingangs genannten Art, insbesondere deren Ausgestaltung als Kaninchenställe zur Haltung von Kaninchen im Außenbereich sind in vielfältigen Ausgestaltungen aus dem Stand der Technik bekannt, diese bieten jedoch insbesondere im Heimtierbereich Kaninchen und Hasen einen nur unzureichenden Schutz, so dass die Tiere weitgehend exponiert den wechselnden Umwelteinflüssen ausgesetzt sind. Artgerechte Rückzugsmöglichkeiten, welche den natürlichen Bedürfnissen der Kleintiere, insbesondere Hasen und Kaninchen entsprechen, sind bei den bekannten Kleintierbehausungen nicht oder bauartbedingt nur in unzureichendem Maße vorhanden.

Aus der US 1 870 957 A ist eine vergleichsweise aufwendige Kleintierbehausung bekannt, die die Tiere wirksamer vor stürmischem Wetter schützt und so konstruiert ist, dass ein Teil davon bequem in die Erde eingelassen werden kann, wodurch ein speziell gekühlter Bereich entsteht, der den Bau simuliert, den das Tier in freier Wildbahn graben und in dem es seine Jungen zur Welt bringen würde.

Hiervon ausgehend liegt der Erfindung die Aufgabe zugrunde, eine besonders kompakte Kleintierbehausung für den Einsatz im Outdoorbereich, d. h. bspw. im Garten, bereitzustellen, welche eine artgerechte Haltung der Kleintiere ermöglicht, diesen insbesondere Rückzugsmöglichkeiten vor wechselnden Umwelt- und Umgebungseinflüssen bietet.

Die Erfindung löst die Aufgabe durch eine Kleintierbehausung mit den Merkmalen des Anspruchs 1. Vorteilhafte Weiterbildungen der Erfindung sind in den abhängigen Ansprüchen angegeben.

Erfindungsgemäß ist die Grundplatte zur Bildung eines einen zweiten Innenraum aufweisenden zweiten Behausungsteils an der dem Haubenkörper gegenüberliegenden Unterseite der Grundplatte mit einem die Unterseite überdeckenden Wannenkörper lösbar verbunden, wobei der Wannenkörper boden- und umfangsseitig zur erdberührenden Anordnung ausgebildet ist. Erfindungsgemäß ist die Grundplatte zwischen dem Haubenkörper und dem Wannenkörper angeordnet. Darüber hinaus sind der erste Innenraum und der zweite Innenraum über eine Kleintierdurchgangsöffnung miteinander verbunden.

Die erfindungsgemäße Kleintierbehausung weist zwei über die Grundplatte voneinander getrennte Innenräume auf, wobei der erste Innenraum des ersten Behausungsteils durch den Haubenkörper und die mit dem Haubenkörper lösbar verbundene Grundplatte gebildet wird.

Der Haubenkörper ist hierzu abgeschlossen ausgebildet und über einen umlaufenden Rand zumindest abschnittsweise mit der Grundplatte lösbar verbunden, wodurch ein erster Innenraum gebildet ist, welcher den Kleintieren eine zuverlässige Rückzugsmöglichkeit bietet.

Weiter weist die erfindungsgemäße Kleintierbehausung das zweite Behausungsteil mit dem zweiten Innenraum auf, welcher durch den Wannenkörper und die mit dem Wannenkörper lösbar verbundene Grundplatte gebildet wird, wobei der Wannenkörper auf der dem Haubenkörper gegenüberliegenden Unterseite zumindest abschnittsweise umlaufend mit der Grundplatte lösbar verbunden ist, wodurch ein zweiter Innenraum gebildet ist.

Erfindungsgemäß ist dabei vorgesehen, dass der Wannenkörper boden- und umfangsseitig zur erdberührenden Anordnung ausgebildet ist. Hierunter wird eine Ausgestaltung des Wannenkörpers verstanden, die es ermöglicht, die Kleintierbehausung derart im Freien anzuordnen, dass der Wannenkörper teilweise oder vollständig im Untergrund angeordnet, bspw. in das Erdreich eingelassen ist. Der Wannenkörper ist hierzu entsprechend druckstabil ausgestaltet, um dem durch das Erdreich auf den Wannenkörper wirkenden Druck Stand zu halten. Darüber hinaus ist der Wannenkörper derart ausgestaltet, dass er vor an der Außenseite des Wannenkörpers anfallendem Wasser geschützt ist und keine Feuchtigkeit über den Untergrund, bspw. das Erdreich, in den Wannenkörper eindringt.

Zur Erzielung der für die vorstehend beschriebene erdberührende Anordnung erforderlichen Eigenschaften kann der Wannenkörper aus einem entsprechend widerstandsfähigen Material ausgebildet und/oder entsprechend dimensioniert sein. So besteht bspw. die Möglichkeit, den Wannenkörper aus einem geeigneten, feuchtigkeitsresistenten Kunststoff mit geeigneter Wanddicke herzustellen und/oder den Wannenkörper zur Erzielung der notwendigen Stabilität mit Sicken und/oder Streben zur Erhöhung der Druckstabilität zu versehen. Darüber hinaus besteht die Möglichkeit, den Wannenkörper mehrteilig auszugestalten, wobei eine Feuchtigkeitsisolierung bspw. durch eine geeignete Beschichtung erzielt wird und für den Wannenkörper dann ein alternatives Material, bspw. Holz oder Metall, verwendet wird.

Gemäß der Erfindung ist ferner vorgesehen, dass der erste Innenraum und der zweite Innenraum über eine Kleintier-Durchgangsöffnung miteinander verbunden sind. Diese kann bspw. dadurch gebildet werden, dass der Haubenkörper und der Wannenkörper gemeinsam über die Grundplatte hinausragen und in diesem, über die Ränder der Grundplatte hinausragenden Bereich zur Abgrenzung der beiden Innenräume gegenüber der Umgebung lösbar miteinander verbunden sind. Alternativ weist die den ersten Innenraum und den zweiten Innenraum voneinander trennende Grundplatte mindestens eine, die Innenräume verbindende Kleintier-Durchgangsöffnung auf, wobei dann Haubenkörper und Wannenkörper umlaufend mit ihren Rändern an der Grundplatte anliegen können.

Die Kleintier-Durchgangsöffnung ist dabei derart ausgestaltet, dass es dem Kleintier, bspw. einem Kaninchen, in einfacher Weise möglich ist, sich zwischen den beiden Innenräumen zu bewegen. Bei einer Anordnung der Kleintierbehausung mit einem in das Erdreich eingebetteten zweiten Behausungsteil besteht somit für die Kleintiere die Möglichkeit, sich zwischen dem oberirdisch angeordneten ersten Innenraum und dem unterirdisch angeordneten zweiten Innenraum hin und her zu bewegen. Die Möglichkeit zum Aufenthalt in einem unterirdisch angeordneten Bereich entspricht dabei dem natürlichen Verhalten vieler Kleintiere, welche dort einen ausreichenden Schutz vor Umwelt- und Umgebungseinflüssen auffinden. Eine mit dem zweiten Behausungsteil im Erdreich angeordnete Kleintierbehausung stellt eine natürliche Bauform eines Baus für viele Arten von Kleintieren dar, welche im natürlichen Umfeld unterirdische Behausungen bevorzugen.

Die erfindungsgemäße Kleintierbehausung ermöglicht es, durch ihre vollständige oder zumindest teilweise Anordnung des zweiten Behausungsteils innerhalb des Erdreichs einen Bereich für die Kleintiere zu schaffen, in welchem über das gesamte Jahr eine im Wesentlichen konstante Temperatur im unteren Bereich herrscht. So ist der Innenraum im Sommer ausreichend kühl und im Winter frostfrei. Die erfindungsgemäße Kleintierbehausung entspricht in ihrer Aufteilung dem natürlichen Lebensraum der Kleintiere und ermöglicht somit ein besonders artgerechtes Halten der Tiere.

Darüber hinaus bietet das im Erdreich angeordnete zweite Behausungsteil einen besonders vorteilhaften Raum zur Anordnung von Behältnissen für Futter und Wasser, nachdem das Klima in dem zweiten Behausungsteil im Winter das Einfrieren verhindert und im Sommer aufgrund niedriger Temperaturen einer Verkeimung vorbeugt. Die Behältnisse können dabei lose in dem Wannenkörper angeordnet oder aber auch mit diesem, bspw. mit der Seitenwand, verbunden sein.

Grundsätzlich besteht bereits über die erfindungsgemäße Ausbildung der Kleintierbehausung mit einer Kleintier-Durchgangsöffnung für die Tiere die Möglichkeit, sich nach Belieben zwischen dem ersten und dem zweiten Innenraum zu bewegen. Nach einer besonders vorteilhaften Ausgestaltung der Erfindung sind jedoch zwei im Abstand voneinander angeordnete Kleintier-Durchgangsöffnungen vorgesehen, die bevorzugt in der Grundplatte angeordnet sind.

Die Verwendung von zwei oder auch mehreren Kleintier-Durchgangsöffnungen bietet den Tieren zwei oder mehr alternative Möglichkeiten, zwischen dem ersten Innenraum und dem zweiten Innenraum hin und her zu wechseln. Die Verwendung von zwei Kleintier-Durchgangsöffnungen ermöglicht es dabei den Tieren, sich bei Konflikten aus dem Weg zu gehen, sodass es nicht zu einer Unruhe zwischen den in der Kleintierbehausung befindlichen Tieren kommt.

Die Ausgestaltung der Kleintier-Durchgangsöffnung ist dabei grundsätzlich frei wählbar, wobei bereits durch die Verwendung einer ausreichend großen Durchgangsöffnung in der Grundplatte den Tieren die Möglichkeit zum Wechseln zwischen den beiden Innenräumen gegeben ist. Nach einer besonders vorteilhaften Ausgestaltung der Erfindung ist jedoch vorgesehen, dass im Bereich der Kleintier-Durchgangsöffnung ein sich an die Grundplatte anschließender, in Richtung auf den Wannenkörperboden erstreckender Niedergang angeordnet ist.

Bei dem Niedergang handelt es sich um eine Auf- und Abstiegshilfe, welche es den Kleintieren erleichtert, bedarfsweise zwischen den Innenräumen hin und her zu wechseln. Der Niedergang schließt dabei an die Unterseite der Grundplatte an und erstreckt sich in Richtung auf den Wannenboden, sodass den Tieren ein einfacher Auf- und Abstieg ermöglicht ist. Die Ausprägung des Niedergangs ist dabei grundsätzlich frei wählbar, wobei dieser auch derart ausgestaltet sein kann, dass er mit seinem der Unterseite der Grundplatte gegenüberliegenden Ende an dem Wannenboden anliegt.

Ferner ist auch die Form des Niedergangs grundsätzlich frei wählbar. So kann dieser bspw. durch eine schräg verlaufende Rampe gebildet sein, welche einenends auf dem Wannenboden anliegt und anderenends an einem Rand der Durchgangsöffnung angrenzt. Nach einer besonders vorteilhaften Ausgestaltung der Erfindung ist jedoch vorgesehen, dass der Niedergang stufenförmig ausgebildet ist. Eine stufenförmige Ausbildung des Niedergangs, wobei dieser dann auch eine gebogene Form aufweisen kann, stellt eine für die Kleintiere besonders einfach zu nutzende Auf- und Abstiegshilfe dar. Den Kleintieren wird es durch eine entsprechende Ausgestaltung des Niedergangs besonders erleichtert, bedarfsweise zwischen den einzelnen Innenräumen hin und her zu wechseln. Darüber hinaus bietet die abgestufte Ausgestaltung des Niedergangs die Möglichkeit, die Stabilität der Grundplatte zu steigern.

Die erfindungsgemäße Kleintierbehausung zeichnet sich dadurch aus, dass sie den Tieren einen sicheren Rückzugsbereich bietet, in dem sie vor Umgebungs- und Umwelteinflüssen ausreichend geschützt sind. Um dabei auch zu gewährleisten, dass keine Feuchtigkeit in die Innenräume gelangt, sind der Haubenkörper und der Wannenkörper in entsprechender Weise mit der Grundplatte verbunden, bspw. durch rastende Verschlusselemente, wie Schnapphaken, die über den Umfang von Wannenkörper und Haubenkörper verteilt angeordnet sind und sowohl eine zuverlässige Arretierung der Körper an der Grundplatte und/oder aneinander, als auch deren einfache Trennung gewährleisten. Besonders vorteilhafter Weise ist dabei vorgesehen, dass die Grundplatte einen umlaufenden, von der Unterseite und/oder Oberseite vorstehenden Steg zur innen- und/oder außenseitigen Anlage an dem Wannenkörper und/oder Haubenkörper aufweist.

Gemäß dieser Ausgestaltung der Erfindung erstreckt sich, bevorzugt im Bereich des Umfangs der Grundplatte von der Unterseite und/oder Oberseite der Grundplatte, ein Steg, welcher in Richtung der Ebene der Grundplatte betrachtet dem Haubenkörper und/oder Wannenkörper umlaufend als Anlage dient, um so sowohl eine stabile als auch flüssigkeitsdichte Verbindung zwischen Haubenkörper, Grundplatte und Wannenkörper herzustellen.

Besonders vorteilhafter Weise weist die Grundplatte dabei beidseitig einen umlaufenden Steg auf, wobei der von der Oberseite vorstehende Steg derart angeordnet ist, dass er innenseitig an dem Haubenkörper anliegt und der unterseitige Steg derart an der Grundplatte angeordnet ist, dass er außenseitig an dem Wannenkörper anliegt. Durch diese Ausgestaltung der Erfindung wird in besonders vorteilhafter Weise das Eindringen von Feuchtigkeit über die Verbindungsbereiche von Haubenkörper, Grundplatte und Wannenkörper verhindert. Die Dichtigkeit kann dabei ergänzend gemäß einer Weiterbildung der Erfindung dadurch erhöht werden, dass im Bereich zwischen dem Steg und dem Wannenkörper und/oder Haubenkörper ein Dichtelement angeordnet ist. Hierbei kann es sich bspw. um geeignete Kunststoffdichtungen handeln, welche vor der Verbindung in dem Bereich der Stege und/oder Haubenkörper und Wannenkörper angeordnet werden oder um geeignete Klebemassen, welche darüber hinaus eine besonders stabile Verbindung zwischen dem Haubenkörper, der Grundplatte und dem Wannenkörper herstellen.

Nach einer weiteren Ausgestaltung der Erfindung ist vorgesehen, dass der Haubenkörper eine mit einer Durchgangsklappe versehene Zutrittsöffnung aufweist. Gemäß dieser Ausgestaltung der Erfindung besteht für die Kleintiere die Möglichkeit, über die Zutrittsöffnung von außen in den ersten Innenraum zu gelangen, bzw. diesen zu verlassen. Die Durchtrittsöffnung ist dabei durch eine Durchgangsklappe verschlossen, welche den Innenraum vor Umgebungseinflüssen wie Wind oder Regen schützt, gleichzeitig den Tieren jedoch die Möglichkeit bietet, nach Belieben zwischen dem ersten Innenraum und einem das Kleintiergehege umgebenden Gebiet hin und her zu wechseln.

Nach einer weiteren Ausgestaltung der Erfindung ist ferner vorgesehen, dass die Durchgangsklappe in einer Schließstellung verriegelbar ist. Die Möglichkeit zur Verriegelung der Durchgangsklappe erlaubt es, die in der Kleintierbehausung angeordneten Kleintiere besonders zuverlässig vor Fressfeinden zu schützen, welche sich über die Zutrittsöffnung Zugang zu den Innenräumen der Kleintierbehausung verschaffen könnten.

Die Ausgestaltung der Verriegelung der Durchgangsklappe ist dabei grundsätzlich frei wählbar. So kann diese auch so ausgestaltet sein, dass diese neben einer Entriegelung der Durchgangsklappe, in der diese sich frei nach innen und außen schwenken lässt und einer Verriegelung der Durchgangsklappe, in der sich diese weder nach innen noch nach außen schwenken lässt, auch eine Festlegung der Durchgangsklappe erlaubt, bei der diese sich entweder nur nach innen (Eingehend) oder nur nach außen (Ausgehend) schwenken lässt.

Besonders vorteilhafter Weise ist dabei vorgesehen, dass die Durchgangsklappe mittels einer motorisch angetriebenen Stelleinheit verriegelbar ist, die mit einer Steuereinheit verbunden ist. Gemäß dieser Ausgestaltung besteht in Abhängigkeit von der Ausführung der Steuereinheit die Möglichkeit, eine automatisierte Steuerung der Verriegelung der Durchgangsklappe vorzunehmen. So kann die Steuereinheit bspw. derart ausgebildet sein, dass eine digitale Durchgangskontrolle erfolgt. Auch besteht die Möglichkeit, über eine entsprechende Ausgestaltung der Steuereinheit eine automatisierte Verriegelung zu vorgegebenen Uhrzeiten oder Tageslichtzuständen vorzunehmen. Ferner besteht bei der Ausgestaltung der Steuereinheit mit der Möglichkeit zur drahtlosen Kommunikation die Möglichkeit des Einsatzes von Fernbedienungen und/oder auf Mobilgeräten installierten Apps, über die eine Verriegelung vorgenommen werden kann.

Nach einer weiteren Ausgestaltung der Erfindung ist vorgesehen, dass der Haubenkörper gelenkig mit dem Wannenkörper verbunden ist. Gemäß dieser Ausgestaltung der Erfindung besteht die Möglichkeit, den Haubenkörper gegenüber der Grundplatte, bspw. über geeignete Scharniere, zu verschwenken, wodurch eine besonders einfache und gute Zugangsmöglichkeit zu den Innenräumen der Kleintierbehausung besteht, um diese bedarfsweise zu reinigen. Besonders vorteilhafter Weise ist hierzu vorgesehen, dass in dem Wannenkörper eine lösbar angeordnete Bodenwanne angeordnet ist, welche besonders einfach entnommen werden kann und somit den Reinigungsvorgang in besonderer Weise erleichtert.

Ein Ausführungsbeispiel der Erfindung wird nachstehend mit Bezug auf die Zeichnungen erläutert. In den Zeichnungen zeigen:
- Fig. 1: eine perspektivische Ansicht einer Kleintierbehausung;
- Fig. 2: eine perspektivische Ansicht eines Wannenkörpers der Kleintierbehausung von Fig. 1;
- Fig. 3a: eine erste perspektivische Ansicht einer Grundplatte der Kleintierbehausung von Fig. 1;
- Fig. 3b: eine zweite perspektivische Ansicht der Grundplatte von Fig. 3a;
- Fig. 4a: eine erste perspektivische Ansicht eines Haubenkörpers der Kleintierbehausung von Fig. 1;
- Fig. 4b: eine zweite perspektivische Ansicht des Haubenkörpers von Fig. 4a;
- Fig. 5: eine Ansicht eines Schnitts der Kleintierbehausung von Fig. 1;
- Fig. 6: in einer Schnittansicht eine vergrößerte Darstellung eines Teilbereichs der Kleintierbehausung von Fig. 5;
- Fig. 7: in einer schematischen Darstellung eine Schnittansicht der Kleintierbehausung von Fig. 1 mit erdberührter Anordnung des Wannenkörpers.

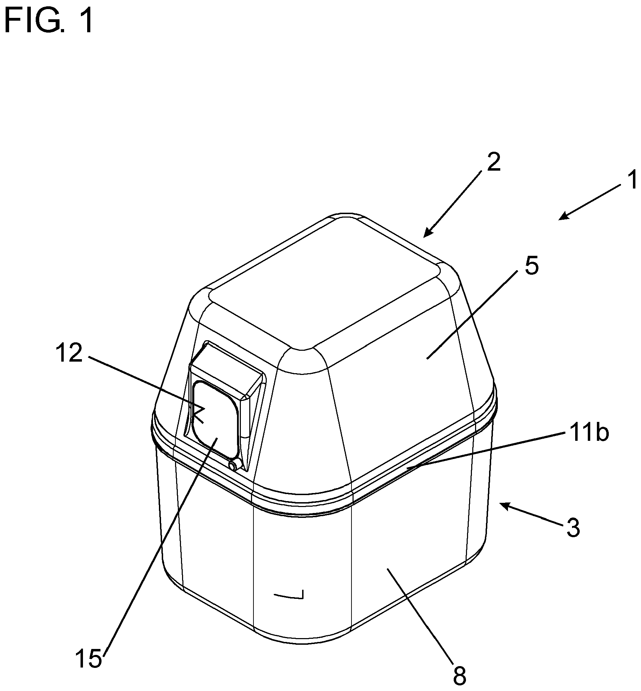

In Figur 1 ist in einer perspektivischen Ansicht eine Ausführungsform einer Kleintierbehausung 1 dargestellt. Die Kleintierbehausung 1 weist dabei einen Haubenkörper 5, einen Wannenkörper 8 sowie eine zwischen dem Haubenkörper 5 und dem Wannenkörper 8 angeordnete Grundplatte 4 auf.

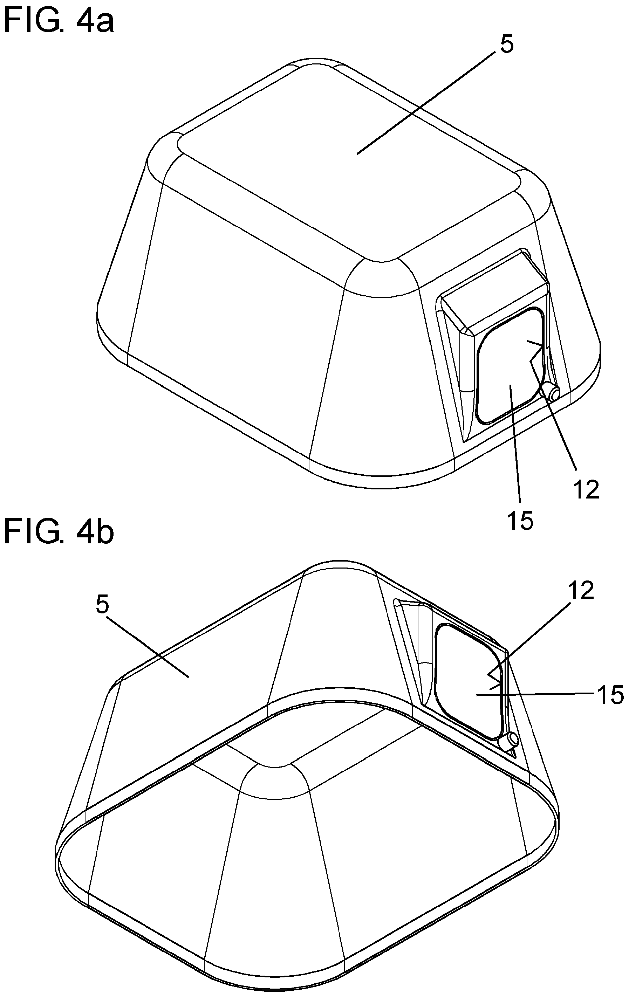

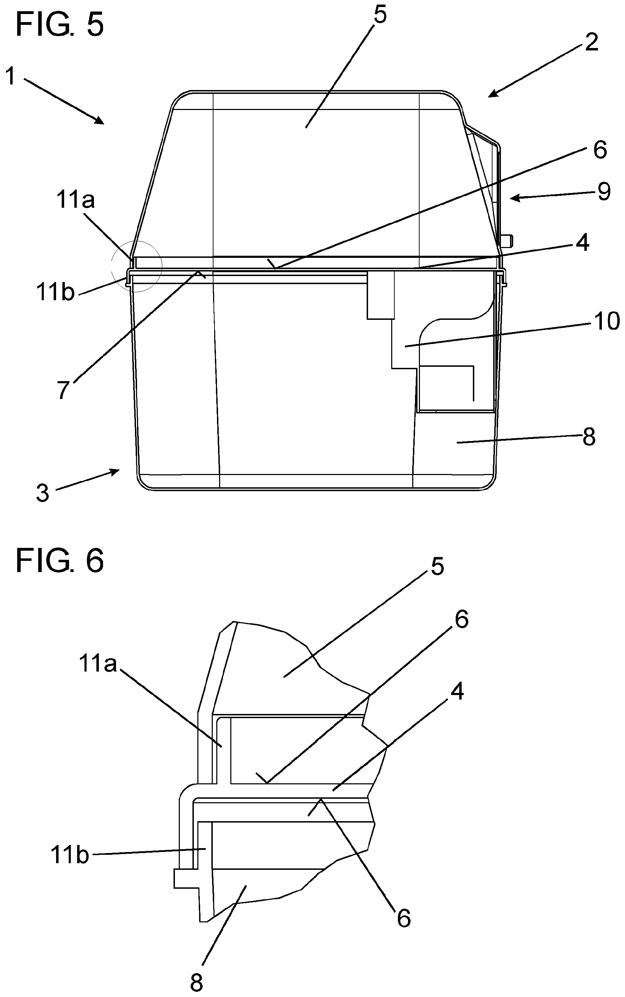

Zur Bildung eines Behausungsteils 2 mit einem ersten Innenraum ist der in den Figuren 4a und 4b in zwei perspektivischen Ansichten dargestellte Haubenkörper 5 an der Grundplatte 4 angeordnet, wobei in der montierten Lage des Haubenkörpers 5 an der Grundplatte 4 der Haubenkörper 5 eine Oberseite 6 der Grundplatte 4 überdeckt. Zur Bildung eines zuverlässigen ersten Behausungsteils 2 liegt dabei der Haubenkörper 5 mit seinem umlaufenden Rand außenseitig an einem von der Oberseite 6 der Grundplatte 4 umlaufend vorstehenden Steg 11a an (vgl. Fig. 5 und 6).

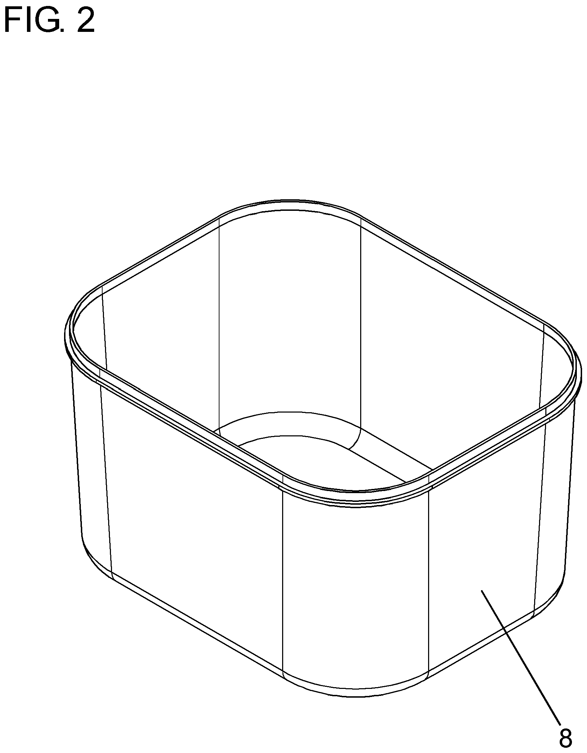

Ein zweites Behausungsteil 3 der Kleintierbehausung 1 mit einem zweiten Innenraum wird durch die Grundplatte 4 und dem an der Grundplatte 4 angeordneten Wannenkörper 8 gebildet. In der montierten Lage zur Bildung des zweiten Behausungsteils 3 liegt dabei der in Figur 2 in einer perspektivischen Ansicht dargestellte Wannenkörper 8 mit seinem umlaufenden Rand außenseitig an einem von einer Unterseite 7 der Grundplatte 4 vorstehenden Steg 11b an.

In der montierten Lage der Kleintierbehausung 1 wird somit ein erster Innenraum durch den Haubenkörper 5 und die Oberseite 6 der Grundplatte 4 abgegrenzt, wohingegen der zweite Behausungsteil 3 durch den Wannenkörper 8 und die Unterseite 7 der Grundplatte 4 abgegrenzt wird.

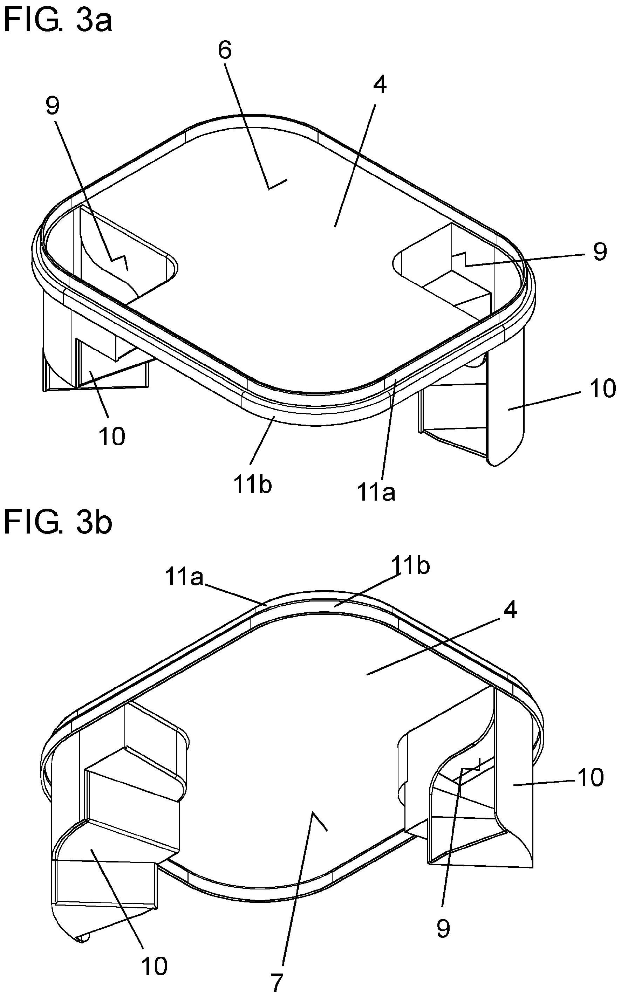

Die Grundplatte 4 weist im Bereich zweier gegenüberliegender Ecken jeweils eine Kleintier-Durchgangsöffnung 9 auf, wobei sich von der Unterseite 7 aus im Bereich der Kleintier-Durchgangsöffnung 9 ein stufenförmiger Niedergang 10 in Richtung auf den Boden des Wannenkörpers 8 erstreckt. Die Niedergänge 10 ermöglichen es den die Kleintierbehausung 1 nutzenden Kleintieren, zwischen dem ersten Behausungsteil 2 und dem zweiten Behausungsteil 3 hin und her zu wechseln (vgl. Figuren 3a und 3b).

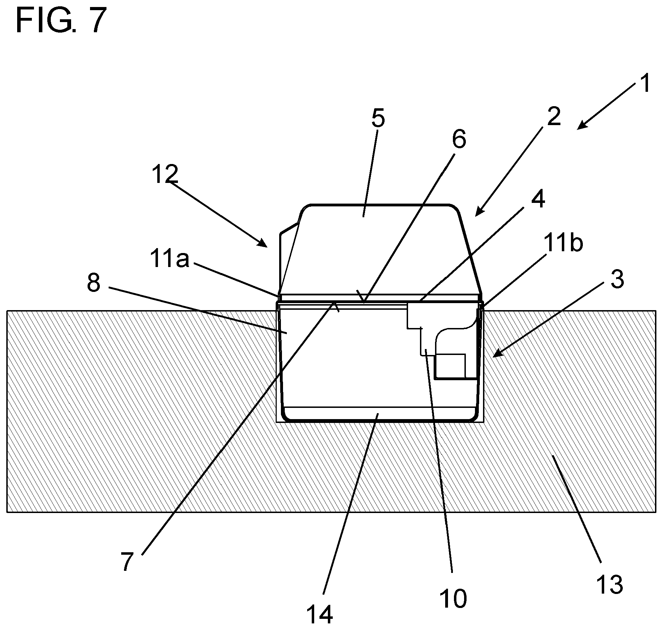

Damit die Kleintiere die Möglichkeit haben, die Kleintierbehausung 1 zu verlassen, weist der Haubenkörper 5 eine Zutrittsöffnung 12 auf, welche mit einer verriegelbaren Durchgangsklappe 15 versehen ist. Eine in dem Wannenkörper 8 anordbare Bodenwanne 14 erleichtert die Reinigung der Kleintierbehausung 1, welche, wie in Figur 7 dargestellt, zur erdberührenden Anordnung des Wannenkörpers 8 vorgesehen ist, wobei dann der Wannenkörper 8 im Wesentlichen vollständig in das Erdreich 13 eingesetzt ist.

### Bezugszeichenliste

- 1: Kleintierbehausung
- 2: erstes Behausungsteil
- 3: zweites Behausungsteil
- 4: Grundplatte
- 5: Haubenkörper
- 6: Oberseite
- 7: Unterseite
- 8: Wannenkörper
- 9: Kleintierdurchgangsöffnung
- 10: Niedergang
- 11a, 11b: Steg
- 12: Zutrittsöffnung
- 13: Erdreich
- 14: Bodenwanne
- 15: Durchgangsklappe

## Patentansprüche

1. Kleintierbehausung zur Outdoorhaltung von Kleintieren, insbesondere Kaninchen, mit
- einem ersten Behausungsteil (2) mit einer Grundplatte (4) und einem eine Oberseite (6) der Grundplatte (4) zumindest teilweise überdeckenden, mit der Grundplatte (4) lösbar verbundenen Haubenkörper (5) zur Bildung eines ersten Innenraums,
wobei die Grundplatte (4) zur Bildung eines einen zweiten Innenraum aufweisenden zweiten Behausungsteils (3) an der dem Haubenkörper (5) gegenüberliegenden Unterseite (7) der Grundplatte (4) mit einem die Unterseite (7) zumindest teilweise überdeckenden Wannenkörper (8) lösbar verbunden ist, der boden- und umfangsseitig zur erdberührenden Anordnung ausgebildet ist und zwischen dem ersten Innenraum und den zweiten Innenraum eine verbindende Kleintier-Durchgangsöffnung (9) angeordnet ist.

2. Kleintierbehausung nach Anspruch 1, **gekennzeichnet durch** zwei im Abstand voneinander, bevorzugt in der Grundplatte (4) angeordnete Kleintier-Durchgangsöffnungen (9) aufweist.

3. Kleintierbehausung nach Anspruch 1 oder 2, **gekennzeichnet durch** einen sich im Bereich der Kleintier-Durchgangsöffnung (9) an die Grundplatte (4) anschließenden, in Richtung auf den Wannenkörperboden erstreckenden Niedergang (10).

4. Kleintierbehausung nach Anspruch 3, **dadurch gekennzeichnet, dass** der Niedergang (10) stufenförmig ausgebildet ist.

5. Kleintierbehausung nach einem oder mehreren der vorhergehenden Ansprüche, **dadurch gekennzeichnet, dass** die Grundplatte (4) einen umlaufenden, von der Unterseite (7) und/oder Oberseite (6) vorstehenden Steg (11a, 11b) zur innen- und/oder außenseitigen Anlage an dem Wannenkörper (8) und/oder Haubenkörper (5) aufweist.

6. Kleintierbehausung nach Anspruch 5, **dadurch gekennzeichnet, dass** im Bereich zwischen dem Steg (11a, 11b) und dem Wannenkörper (8) und/oder Haubenkörper (5) ein Dichtelement angeordnet ist.

7. Kleintierbehausung nach einem oder mehreren der vorhergehenden Ansprüche, **dadurch gekennzeichnet, dass** der Haubenkörper (5) eine mit einer Durchgangsklappe (15) versehene Zutrittsöffnung (12) aufweist.

8. Kleintierbehausung nach Anspruch 7, **dadurch gekennzeichnet, dass** die Durchgangsklappe (15) in einer Schließstellung verriegelbar ist.

9. Kleintierbehausung nach Anspruch 7, **dadurch gekennzeichnet, dass** die Durchgangsklappe (15) mittels einer motorisch angetriebenen Stelleinheit verriegelbar ist, die mit einer Steuereinheit verbunden ist.

10. Kleintierbehausung nach einem oder mehreren der vorhergehenden Ansprüche, **dadurch gekennzeichnet, dass** der Haubenkörper (5) gelenkig mit dem Wannenkörper (8) verbunden ist.

11. Kleintierbehausung nach einem oder mehreren der vorhergehenden Ansprüche, **gekennzeichnet durch** eine lösbar im Wannenkörper (8) anordbare Bodenwanne (14).

## Claims

1. Housing for small animals for outdoor keeping of small animals, especially rabbits, with
- a first housing part (2) with a base plate (4) and a hood body (5) at least partially covering a top side (6) of the base plate (4) and detachably connected to the base plate (4) to form a first interior space,
whereby
the base plate (4) for forming a second housing part (3) having a second interior space is detachably connected on the lower side (7) of the base plate (4) opposite the hood body (5) to a tub body (8) which at least partially covers the lower side (7) and which is designed on the bottom and peripheral side for arrangement in contact with the ground, and a connecting passage opening for small animals (9) is arranged between the first interior space and the second interior space .

2. Housing for small animals according to claim 1, **characterized by** two passage openings for small animals (9) arranged at a distance from each other, preferably in the base plate (4).

3. Housing for small animals according to claim 1 or 2, **characterized by** a ramp (10) adjoining the base plate (4) in the region of the passage opening for small animals (9) and extending towards the bottom of the tub body.

4. Housing for small animals according to claim 3, **characterized in that** the ramp (10) is designed in a stepped manner.

5. Housing for small animals according to one or more of the preceding claims, **characterized in that** the base plate (4) has a circumferential web (11a, 11b) projecting from the lower side (7) and/or top side (6) for abutment on the inside and/or outside of the tub body (8) and/or hood body (5).

6. Housing for small animals according to claim 5, **characterized in that** a sealing element is arranged in the region between the web (11a, 11b) and the tub body (8) and/or hood body (5).

7. Housing for small animals according to one or more of the preceding claims, **characterized in that** the hood body (5) comprises an access opening (12) provided with an access hatch (15).

8. Housing for small animals according to claim 7, **characterized in that** the access flap (15) can be locked in a closed position.

9. Housing for small animals according to claim 7, **characterized in that** the access flap (15) can be locked by means of a motor-driven setting unit which is connected to a control unit.

10. Housing for small animals according to one or more of the preceding claims, **characterized in that** the hood body (5) is connected to the tub body (8) in an articulated manner.

11. Housing for small animals according to one or more of the preceding claims, **characterized by** a floor tub (14) detachably arrangeable in the tub body (8).

## Revendications

1. Habitation pour petits animaux pour l'élevage en plein air de petits animaux, en particulier de lapins, avec
- une première partie de habitation (2) avec une plaque de base (4) et un corps du capot (5) couvrant au moins partiellement un côté supérieur (6) de la plaque de base (4) et relié de manière amovible à la plaque de base (4) pour former un premier espace intérieur,
dans lequel
la plaque de base (4) destinée à former une deuxième partie de habitation (3) ayant un deuxième espace intérieur est reliée de manière amovible sur le côté inférieur (7) de la plaque de base (4) opposé au corps du capot (5) à un corps de bac (8) qui recouvre au moins partiellement le côté inférieur (7) et le corps de bac (8) est conçu sur le fond et le côté périphérique pour être disposé en contact avec le sol, et une ouverture de passage de connexion pour les petits animaux (9) est disposée entre le premier espace intérieur et le deuxième espace intérieur.

2. Habitation pour petits animaux selon la revendication 1, **caractérisé par** deux ouvertures de passage pour petits animaux (9) disposées à distance l'une de l'autre, de préférence dans la plaque de base (4).

3. Habitation pour petits animaux selon la revendication 1 ou 2, **caractérisé par** une rampe (10) attenante à la plaque de base (4) dans la zone de l'ouverture de passage pour petits animaux (9) et s'étendant vers le fond du corps de la bac.

4. Habitation pour petits animaux selon la revendication 3, **caractérisé par le fait que** la rampe (10) est conçue en escalier.

5. Habitation pour petits animaux selon l'une ou plusieurs des revendications précédentes, **caractérisé par le fait que** la plaque de base (4) présente une barette circonférentielle (11a, 11b) faisant saillie à partir du côté inférieur (7) et/ou du côté supérieur (6) pour venir en butée à l'intérieur et/ou à l'extérieur du corps de la bac (8) et/ou du corps du capot (5).

6. Habitation pour petits animaux selon la revendication 5, **caractérisé par le fait qu'**un élément d'étanchéité est disposé dans la zone située entre la barette (11a, 11b) et le corps de la bac (8) et/ou le corps du capot (5).

7. Habitation pour petits animaux selon une ou plusieurs des revendications précédentes, **caractérisé en ce que** le corps du capot (5) comprend une ouverture d'accès (12) munie d'une trappe d'accès (15).

8. Habitation pour petits animaux selon la revendication 7, **caractérisé par le fait que** la trappe d'accès (15) peut être verrouillée en position fermée.

9. Habitation pour petits animaux selon la revendication 7, **caractérisé par le fait que** la trappe d'accès (15) peut être verrouillée au moyen d'une unité de réglage motorisée reliée à une unité de commande.

10. Habitation pour petits animaux selon l'une ou plusieurs des revendications précédentes, **caractérisé par le fait que** le corps du capot (5) est relié au corps de la bac (8) de manière articulée.

11. Habitation pour petits animaux selon l'une ou plusieurs des revendications précédentes, **caractérisé par** un bac de sol (14) pouvant être disposé de manière amoviblee dans le corps du bac (8).
